# FASCICULE DE BREVET EUROPEEN

(11) **EP 3 366 891 B1**
(45) Date de publication et mention de la délivrance du brevet: **25.12.2019**
(21) Numéro de dépôt: 18157777.6
(22) Date de dépôt: 21.02.2018
(51) Int. Cl.: F01D 25/20, F02C 7/06

(54) **SYSTÈME DE GÉNÉRATION D'ÉNERGIE ÉLECTRIQUE**
STROMERZEUGUNGSSYSTEM
SYSTEM FOR GENERATING ELECTRIC POWER

(30) Priorité: 27.02.2017 BE 201705117
(43) Date de publication de la demande: 29.08.2018
(73) Titulaire: SAFRAN AERO BOOSTERS S.A., 4041 Herstal (BE)
(72) Inventeur: MARICHAL, Michael, 1160 Audergehm (BE); RAIMARCKERS, Nicolas, 4263 Tourinne (BE)
(74) Mandataire: Gevers Patents

(56) Documents cités:
- CA-A1- 2 352 673
- JP-A- 2013 079 634

## Description

### Domaine technique

L'invention se rapporte à un système de lubrification. L'invention propose également une turbomachine d'aéronef et un aéronef.

### Etat de la technique

Une turbomachine d'aéronef dispose en général d'une génération d'énergie électrique principale qui est destinée à l'alimentation électrique de l'avion. Un générateur électrique d'une turbomachine permet la conversion d'une énergie mécanique en énergie électrique. Un générateur électrique principal d'une turbomachine est en général positionné au niveau du boitier d'accessoires.

Les turbomachines utilisent de plus en plus d'éléments nécessitant une alimentation électrique. Le système de génération électrique principal ne prévoit pas l'alimentation de tels éléments. La distribution de l'énergie électrique aux éléments de la turbomachine est effectuée en général au travers d'un FADEC, terme connu d'un homme du métier. Cependant le système FADEC à une puissance électrique limitée pour l'alimentation d'éléments nécessitant une alimentation électrique.

Le boitier d'accessoires d'une turbomachine fournit une énergie mécanique au générateur électrique qu'il restitue sous forme d'énergie électrique. Le boitier d'accessoire est en général relié à l'arbre du compresseur de la turbomachine. Le boitier d'accessoire permet également l'entrainement de par exemple : une pompe à huile, une pompe à carburant et une pompe hydraulique. Le boitier d'accessoire présente un nombre limité d'emplacements pour des raisons d'encombrement notamment ce qui rend l'ajout de tout nouvel élément comme un deuxième générateur électrique non souhaitable.

Le document FR 2 878 287 A1 présente une turbomachine d'aéronef munie d'un système de génération d'électricité auxiliaire permettant un complément d'alimentation en électricité d'un aéronef. Cependant, le système proposé prévoit l'intégration d'un générateur de courant électrique coaxial à la turbomachine, c'est-à-dire autour du rotor basse pression au niveau du palier arrière ce qui engendre une prolongation du rotor basse pression. Le système proposé engendre également une prise d'énergie au niveau du rotor de la turbomachine. Le document JP 2013 079634 divulgue une prise d'énergie dans un système de lubrification.

### Résumé de l'invention

Un des buts de la présente invention est de fournir un système de génération d'énergie électrique qui peut être intégré de manière plus optimale dans un aéronef et qui permet d'utiliser de l'énergie qui est habituellement perdue ou peu utilisée. A cette fin, les inventeurs proposent un système de lubrification comprenant un réservoir d'huile et un groupe de lubrification,
- ledit groupe de lubrification comprenant au moins une pompe et des tuyaux ;
- ladite au moins une pompe étant configurée pour faire circuler de l'huile dans lesdits tuyaux ;
- ledit réservoir d'huile comprend un générateur électrique, un élément de conversion pour entrer en contact avec de l'huile du système de lubrification, et, un désaérateur d'huile ;
- ledit générateur comprend une partie fixe et une partie mobile pour entrer en rotation par un mouvement d'huile, pour convertir de l'énergie cinétique d'huile du système de lubrification en énergie électrique ;
- ledit élément de conversion étant mécaniquement relié à ladite partie mobile pour entraîner cette dernière à partir d'un mouvement d'huile ;
- ledit désaérateur d'huile comprend :
   ∘ ledit élément de conversion pour convertir un mouvement d'huile en entrée du réservoir d'huile en un mouvement de rotation,
   ∘ un évent ;
- ladite partie mobile et ladite partie fixe dudit générateur étant logées dans ledit évent.

L'invention permet la récupération d'une énergie disponible au niveau d'un réservoir d'huile. L'invention permet la génération d'énergie électrique au niveau d'un réservoir d'huile. L'invention permet de fournir un générateur d'énergie auxiliaire disposant d'une meilleure intégration car il ne nécessite pas de prise sur le rotor de la turbomachine ou sur le boitier d'accessoire. L'invention utilise l'énergie cinétique de l'huile qui est habituellement perdue. Au final, la solution proposée par l'invention est plus favorable d'un point de vue énergétique.

Le générateur électrique de l'invention est un générateur d'énergie électrique. Un générateur d'énergie électrique est de préférence une machine tournante.

L'élément de conversion comprend de préférence des aubes. Par exemple l'élément de conversion est en mousse.

L'avantage de positionner le générateur d'énergie électrique au niveau de l'arrivée de l'huile dans l'enceinte du réservoir d'huile est de pouvoir récupérer l'énergie de l'huile. La pompe fournit une énergie à l'huile pour sa circulation dans le système de lubrification. Lors de son retour dans l'enceinte du réservoir d'huile, l'énergie de l'huile est en général perdue. L'invention permet de récupérer une partie de cette énergie sans pour autant entraîner de perte de charge de l'huile au niveau des tuyaux.

Le mouvement de l'huile lors de son entrée dans le réservoir d'huile est de préférence un mouvement essentiellement rectiligne.

L'avantage de positionner le générateur électrique dans un désaérateur d'huile permet d'utiliser la partie rotative ainsi que la partie fixe du désaérateur d'huile comme du stator et du rotor d'un générateur électrique. Le positionnement de l'élément de conversion dans le désaérateur d'huile permet d'actionner le générateur électrique à partie de l'énergie cinétique de l'huile destinée à être dissipée dans le réservoir d'huile.

Préférentiellement, le générateur électrique est un générateur de courant continu.

L'avantage d'un générateur électrique de courant continu est qu'il permet d'alimenter directement des dispositifs électroniques sans avoir recours à un dispositif permettant la conversion d'un courant alternatif en courant continu.

Les inventeurs proposent aussi une turbomachine comprenant un système de lubrification tel que décrit précédemment.

Les inventeurs proposent aussi un aéronef comprenant un système de lubrification tel que décrit précédemment.

L'invention permet la génération d'énergie électrique sans prélèvement mécanique au niveau des parties tournantes reliées à l'arbre du compresseur. L'invention permet la génération d'énergie électrique sans répercussion sur les performance d'une turbomachine. L'énergie électrique générée par le générateur électrique ne nécessite pas une plus grande prise d'énergie par la pompe à huile au niveau du boitier d'accessoires.

L'avantage d'un générateur électrique sans prise directe avec le boitier d'accessoire est de permettre l'alimentation en énergie électrique de systèmes électroniques de la turbomachine sans passer par le générateur d'énergie principale de la turbomachine ou par la distribution d'énergie électrique du FADEC. L'invention permet de doter une turbomachine d'un système de génération électrique local permettant d'alimenter un système de mesure et ou de contrôle. Un système de mesure ou de contrôle est de préférence un capteur ou un dispositif intelligent.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre une vue schématique d'un mode de réalisation qui ne fait pas partie de l'invention ;
- la Fig.2 montre une vue schématique d'un mode de réalisation selon l'invention ;
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

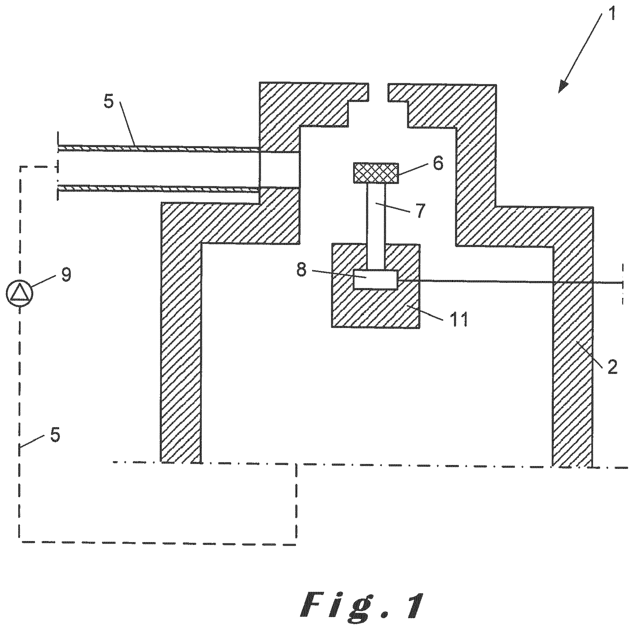

La figure 1 montre un exemple de mode de réalisation d'un générateur électrique 8 positionné au niveau d'un réservoir d'huile 2, qui ne fait pas partie de l'invention. Le générateur électrique 8 est par exemple positionné à l'intérieur de l'enceinte du réservoir d'huile 2. Le générateur électrique 8 comprend une partie rotative 7 et une partie fixe 11. La partie rotative 7 est entrainée par un élément de conversion 6 qui est lui-même entrainé par l'huile lors du retour de l'huile dans le réservoir d'huile 2. L'élément de conversion 6 permet de transférer l'énergie cinétique de l'huile à l'élément rotatif 7 par l'intermédiaire de l'élément de conversion 6. L'élément de conversion 6 est de préférence muni d'aubes. L'élément de conversion 6 est par exemple muni d'ailettes ou de pales. L'élément de conversion 6 est muni de moyen permettant une de capter le mouvement de l'huile et de le restituer sous forme d'un mouvement de rotation de la partie rotative 7. De préférence, l'axe de rotation de la partie rotative 7 et de l'élément de conversion 6 décrit un angle compris entre 0° et 90° par rapport à la direction essentiellement rectiligne de l'huile dans le tuyau 5. Par exemple, l'axe de rotation de la partie rotative 7 et de l'élément de conversion 6 est perpendiculaire à la direction essentiellement rectiligne de l'huile dans le tuyau 5. Par exemple, l'axe de rotation de la partie rotative 7 et de l'élément de conversion 6 est parallèle à la direction essentiellement rectiligne de l'huile dans le tuyau 5. Le générateur électrique 8 comprend une portion de la partie rotative 7 qui est par exemple munies d'aimants. La partie fixe 11 du générateur électrique est par exemple munies de bobines. La rotation de la portion de la partie rotative 7 munie d'aimants dans la partie fixe 11 munies de bobine génère un signal électrique. Le signal électrique généré a un courant et une tension qui permettent l'alimentation de dispositifs électroniques. Les dispositifs électroniques sont par exemple des capteurs qui permettent la mesure de paramètres dans le système de lubrification 1, au niveau du réservoir d'huile 2, ou encore au niveau de la turbomachine. Le signal électrique généré par le générateur électrique 8 permet par exemple d'alimenter des capteurs de température, de pression, de pression différentielle, de constante diélectrique d'un fluide...

Le mode de réalisation de la figure 1 prévoit le retour de l'huile dans l'enceinte du réservoir d'huile 2 au niveau d'un entrée d'huile ou d'une arrivée d'huile. De préférence l'entrée d'huile et l'élément de conversion 6 sont configurés afin que l'énergie transmise à l'élément de conversion 6 par l'huile corresponde à une énergie qui aurait été dissipée au niveau du réservoir d'huile 2 en l'absence de l'invention et non à de l'énergie supplémentaire fournie par la pompe 9. L'huile est pompée par le groupe de lubrification qui comprend la pompe 9 et est acheminée par les tuyaux 5 dans la turbomachine où elle est projetée sur des roulements. L'huile est de préférence pompée dans la partie basse du réservoir d'huile 2 pour être acheminée vers la turbomachine. Les roulements permettent de réduire les frottements entre les parties du rotor de la turbomachine et le stator. Après projection sur les roulements, l'huile est réacheminée vers le réservoir d'huile 2 par les tuyaux 5. L'huile est de préférence réacheminée dans la partie haute du réservoir d'huile 2. La partie haute du réservoir d'huile 2 est de préférence remplie d'air. Lors de son retour dans le réservoir d'huile 2, l'huile a une énergie cinétique que l'invention permet de convertir en partie en énergie électrique. En l'absence d'un générateur électrique 8 dans le réservoir d'huile 2, l'huile perd son énergie cinétique sous la forme de frottements visqueux dans le réservoir d'huile 2.

Par exemple, l'élément de conversion est situé dans une partie d'entrée d'huile du réservoir d'huile. L'avantage de positionner l'élément de conversion dans une partie d'entrée de l'huile dans le réservoir d'huile est que l'élément de conversion permet de capter l'énergie cinétique de l'huile et de la convertir en un mouvement de rotation de la partie rotative sans pour autant causer de perte de charge au niveau du tuyau d'arrivée de l'huile dans le réservoir d'huile. Le positionnement de l'élément de conversion dans le réservoir d'huile permet d'actionner le générateur électrique à partie de l'énergie cinétique de l'huile destinée à être dissipée dans le réservoir d'huile.

Le générateur d'électricité 8 dispose de préférence de moyens d'étanchéités disposés entre la partie rotative 7 et la partie fixe 11 afin d'empêcher la pénétration de l'huile dans la partie ou la partie rotative 7 présente des aimants et ou la partie fixe 11 est équipée de bobines. De préférence le générateur électrique 8 dispose d'une partie étanche à l'huile afin que l'huile qui est par exemple chargée d'éléments ferromagnétiques et ou métallique ne perturbe la génération d'électricité. De préférence la partie étanche est une cavité étanche. Par exemple le générateur électrique 8 n'est pas soumis à un flux d'huile liquide mais est soumis à un air chargé de particules d'huile.

Selon un autre mode de réalisation, le générateur électrique 8 est situé en dehors de l'enceinte destinée à recevoir l'huile. De préférence, la partie de conversion 6 est positionnée de telle sorte qu'elle puisse capter une partie de l'énergie cinétique de l'huile lors de son entrée dans l'enceinte du réservoir d'huile 2. Le générateur électrique 8 reçoit alors la portion de la partie rotative 7 équipée d'aimants à l'extérieur de l'enceinte du réservoir d'huile 2. Une cavité dans le réservoir d'huile 2 permet par exemple le passage de l'élément 7 afin de pouvoir transférer le mouvement de rotation à l'extérieur du réservoir d'huile 2. La cavité dans le réservoir d'huile 2 est de préférence munie de moyens d'étanchéités afin de prévenir les risques de fuite d'huile. La partie rotative 7 permet de transférer un mouvement de rotation de l'intérieur de l'enceinte du réservoir d'huile 2 à l'extérieur de l'enceinte où se trouve le générateur électrique 8. Le réservoir d'huile 2 comprend une enceinte qui dispose de tuyaux 5 pour le pompage de l'huile et l'arrivée de l'huile. Le réservoir d'huile 2 comprend en outre des extensions telles que pour accueillir un générateur électrique 8 ou encore un désaérateur d'huile 13.

Par exemple, l'élément de conversion est situé dans un desdits tuyaux débouchant dans le réservoir d'huile. L'avantage de positionner l'élément de conversion dans un des tuyaux débouchant dans le réservoir d'huile est de pouvoir actionner un générateur électrique de manière efficace. Par exemple le tuyau présente un diamètre plus large à l'emplacement de l'élément de conversion et ce jusqu'à ce qu'il débouche dans le réservoir d'huile.

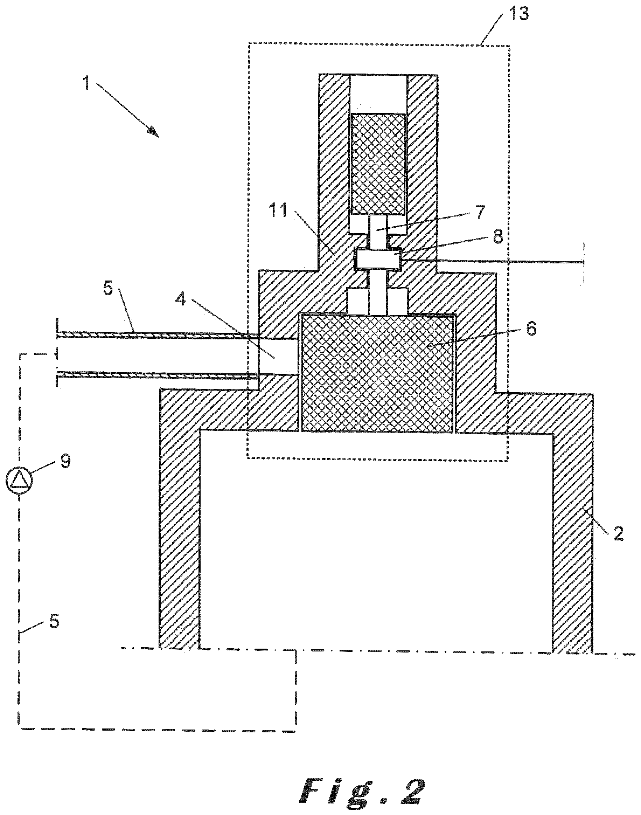

Selon un autre mode de réalisation tel que représenté sur la figure 2, le réservoir d'huile 2 comprend un désaérateur d'huile 13 qui est disposé sur la partie haute du réservoir d'huile 2. Le désaérateur d'huile 13 est un dispositif qui permet à l'air contenu dans l'huile à son retour dans le réservoir d'huile 2, de s'échapper du réservoir d'huile 2. Le désaérateur d'huile 13 permet également de débarrasser cet air de toute particule d'huile ou de toute vapeur d'huile. L'intérêt d'un tel dispositif est de limiter les pertes d'huiles lors du fonctionnement de la turbomachine. Selon ce mode de réalisation de l'invention, le désaérateur d'huile 13 comprend un élément de conversion 6 qui permet de capter l'énergie cinétique de l'huile à son retour dans le réservoir d'huile 2 afin de la transmettre à une partie rotative 7 munie d'un filtre au niveau de la partie supérieure de la partie rotative 7. Le désaérateur d'huile est disposé dans une prolongement du réservoir d'huile 2. Le désaérateur d'huile 13 comprend le générateur électrique 8. Le générateur électrique 8 utilise la rotation de la partie rotative 7 du désaérateur d'huile 13 par rapport à la partie fixe 11 pour générer de l'électricité. Dans ce mode de réalisation, le générateur électrique 8 est par exemple constitué d'une portion de la partie rotative 7 qui est munie d'aimants et d'une portion de la partie fixe 11 qui est munie de bobines. Les portions munies d'aimants et de bobines sont positionnées de telle sorte qu'une interaction électromagnétique entre les aimants et les bobines est possible. Dans ce mode de réalisation, l'évent dans lequel est agencé la partie rotative 7 est par exemple équipé de moyen d'étanchéités à l'huile afin d'éviter à l'air éventuellement chargé d'huile de passer au niveau du générateur électrique 8. Ce mode de réalisation prévoit un passage pour l'air entre la partie basse du désaérateur d'huile 13 et la partie haute du désaérateur d'huile 13 autre que le passage prévu pour la partie rotative 7. Ce passage pour l'air n'est pas illustré dans les figures. Ce mode de réalisation de l'invention peut par exemple être implémenté sur un dispositif déséarateur d'huile 13 déjà existant.

Selon un autre mode de réalisation qui ne fait pas partie de l'invention et non décrit par les figures, l'élément de conversion 6 est positionné dans le tuyau 5 qui débouche dans le réservoir d'huile 4. L'axe de rotation de l'élément de conversion 6 est positionné de manière perpendiculaire au sens de déplacement de l'huile dans le tuyau 5. Le tuyau 5 dispose d'un orifice muni de moyen d'étanchéités afin de permettre à la partie rotative 7 de pouvoir transférer l'énergie captée par l'élément de conversion au générateur électrique 8 situé dans l'enceinte du réservoir d'huile ou dans une partie extérieure à l'enceinte du réservoir d'huile. Afin de limiter les pertes de charges de l'huile engendrées par l'élément de conversion 6 dans le tuyau 5, le tuyau 5 présente une section plus large, dans le sens d'écoulement de l'huile, à partir de l'élément de conversion 6 jusqu'à l'arrivée du tuyau 5 dans l'enceinte du réservoir d'huile 2.

Selon un autre mode de réalisation qui ne fait pas partie de l'invention et non décrit par les figures, l'élément de conversion 6 est positionné dans le tuyau 5 qui débouche dans le réservoir d'huile 2. L'axe de rotation de l'élément de conversion 6 est positionné de manière parallèle à la direction de l'huile dans le tuyau 5. Ce mode de réalisation permet de positionner l'élément de conversion 6 dans le tuyau 5 sans pour autant nécessiter le percement d'une cavité et le placement de moyens d'étanchéités pour laisser passer la partie rotative 7. Afin de limiter les pertes de charges de l'huile engendrées par l'élément de conversion 6 dans le tuyau 5, le tuyau 5 présente une section plus large, dans le sens d'écoulement de l'huile, à partir de l'élément de conversion jusqu'à l'arrivée du tuyau 5 dans l'enceinte du réservoir d'huile 2.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Système de lubrification 1 comprenant un réservoir d'huile 2 et un groupe de lubrification,
- ledit groupe de lubrification comprenant au moins une pompe 9 pour faire circuler de l'huile dans des tuyaux 5 ;
- ledit réservoir d'huile 2 comprend un générateur 8 électrique, un élément de conversion 6 pour entrer en contact avec de l'huile du système de lubrification 1, et, un désaérateur d'huile 13 comprenant l'élément de conversion 6 pour convertir un mouvement d'huile en entrée du réservoir d'huile 2 en un mouvement de rotation et un évent ;
- ledit générateur 8 étant logé dans ledit évent comprend une partie fixe 11 et une partie mobile 7 mécaniquement relié à l'élément de conversion 6 pour entrer en rotation par un mouvement d'huile, pour convertir de l'énergie cinétique d'huile du système de lubrification en énergie électrique.

## Revendications

1. Système de lubrification (1) comprenant un réservoir d'huile (2) et un groupe de lubrification,
- ledit groupe de lubrification comprenant au moins une pompe (9) et des tuyaux (5) ;
- ladite au moins une pompe (9) étant configurée pour faire circuler de l'huile dans lesdits tuyaux (5) ;
**caractérisé en ce que**
- ledit réservoir d'huile (2) comprend un générateur (8) électrique, un élément de conversion (6) pour entrer en contact avec de l'huile du système de lubrification (1), et, un désaérateur d'huile (13), et **en ce que** ;
- ledit générateur (8) comprend une partie fixe (11) et une partie mobile (7) pour entrer en rotation par un mouvement d'huile, pour convertir de l'énergie cinétique d'huile du système de lubrification en énergie électrique, et **en ce que** :
- ledit élément de conversion étant mécaniquement relié à ladite partie mobile (7) pour entraîner cette dernière à partir d'un mouvement d'huile, et **en ce que** ;
- ledit désaérateur d'huile (13) comprend :
∘ ledit élément de conversion (6) pour convertir un mouvement d'huile en entrée du réservoir d'huile (2) en un mouvement de rotation,
∘ un évent, et **en ce que** ;
- ladite partie mobile (7) et ladite partie fixe (11) dudit générateur (8) étant logées dans ledit évent.

2. Système de lubrification (1) selon la revendication précédente **caractérisé en ce que** ledit générateur (8) est un générateur de courant continu.

3. Turbomachine comprenant un système de lubrification (1) selon l'une quelconque des revendications précédentes.

4. Aéronef comprenant un système de lubrification (1) selon l'une quelconque des revendications précédentes.

## Patentansprüche

1. Schmiersystem (1), das einen Ölbehälter (2) und ein Schmieraggregat umfasst,
- wobei das Schmieraggregat mindestens eine Pumpe (9) und Rohre (5) umfasst;
- wobei die mindestens eine Pumpe (9) konfiguriert ist, um das Öl in den Rohren (5) zirkulieren zu lassen;
**dadurch gekennzeichnet, dass**
- der Ölbehälter (2) einen elektrischen Generator (8), ein Umwandlungselement (6), um mit dem Öl des Schmiersystems (1) in Kontakt zu treten, und einen Ölentlüfter (13) umfasst, und dass;
- der Generator (8) einen feststehenden Teil (11) und einen beweglichen Teil (7) umfasst, um sich durch eine Ölbewegung in Drehung zu versetzen, um kinetische Energie von Öl des Schmiersystems in elektrische Energie umzuwandeln, und dass:
- das Umwandlungselement mechanisch mit dem beweglichen Teil (7) verbunden ist, um diesen Letzteren ausgehend von einer Ölbewegung anzutreiben, und dass;
- der Ölentlüfter (13) Folgendes umfasst:
∘ das Umwandlungselement (6), um eine Ölbewegung am Eingang des Ölbehälters (2) in eine Drehbewegung umzuwandeln,
∘ eine Entlüftung, und dass;
- der bewegliche Teil (7) und der feststehende Teil (11) des Generators (8) in der Entlüftung untergebracht sind.

2. Schmiersystem (1) nach dem vorstehenden Anspruch, **dadurch gekennzeichnet, dass** der Generator (8) ein Gleichstromgenerator ist.

3. Turbomaschine, die ein Schmiersystem (1) nach einem der vorstehenden Ansprüche umfasst.

4. Luftfahrzeug, das ein Schmiersystem (1) nach einem der vorstehenden Ansprüche umfasst.

## Claims

1. Lubrication system (1) comprising an oil tank (2) and a lubrication unit,
- said lubrication unit comprising at least one pump (9) and pipes (5);
- said at least one pump (9) being configured to make oil circulate in said pipes (5);
**characterised in that**
- said oil tank (2) comprises an electric generator (8), a conversion element (6) to enter into contact with the oil of the lubrication system (1), and, an oil deaerator (13), and **in that**;
- said generator (8) comprises a fixed portion (11) and a mobile portion (7) to enter into rotation by an oil movement, to convert kinetic energy of oil of the lubrication system into electric energy, and **in that**:
- said conversion element being mechanically connected to said mobile portion (7) to drive the latter from an oil movement, and **in that**;
- said oil deaerator (13) comprises:
∘ said conversion element (6) to convert an oil movement at the inlet of the oil tank (2) into a rotation movement,
∘ a vent, and **in that**;
- said mobile portion (7) and said fixed portion (11) of said generator (8) being housed in said vent.

2. Lubrication system (1) according to the preceding claim, **characterised in that** said generator (8) is a continuous current generator.

3. Turbine engine comprising a lubrication system (1) according to any one of the preceding claims.

4. Aircraft comprising a lubrication system (1) according to any one of the preceding claims.
